(19) **Europäisches Patentamt / European Patent Office / Office européen des brevets**

(11) **EP 1 489 451 B1**

(12) # EUROPÄISCHE PATENTSCHRIFT

(45) Veröffentlichungstag und Bekanntmachung des Hinweises auf die Patenterteilung:
**02.01.2008 Patentblatt 2008/01**

(51) Int Cl.:
*G02B 27/00* (2006.01)  *G02B 9/64* (2006.01)
*G02B 13/18* (2006.01)  *G03B 21/12* (2006.01)
*G03B 21/14* (2006.01)  *G02B 13/16* (2006.01)

(21) Anmeldenummer: **04014036.0**

(22) Anmeldetag: **16.06.2004**

(54) **Hoch geöffnetes Projektionsobjektiv**

Projection lens with high aperture ratio

Objectif de projection à grande ouverture

(84) Benannte Vertragsstaaten:
**DE ES FR GB IT**

(30) Priorität: **20.06.2003 DE 10328094**

(43) Veröffentlichungstag der Anmeldung:
**22.12.2004 Patentblatt 2004/52**

(73) Patentinhaber: **Jos. Schneider Optische Werke GmbH**
**55543 Bad Kreuznach (DE)**

(72) Erfinder: **Schauss, Udo**
**55596 Waldböckelheim (DE)**

(74) Vertreter: **Köllner, Malte**
**Köllner & Partner**
**Patentanwälte**
**Vogelweidstrasse 8**
**60596 Frankfurt am Main (DE)**

(56) Entgegenhaltungen:
**DE-A- 3 318 905          US-A- 2 100 290**
**US-A- 2 803 996          US-A- 2 803 997**
**US-A- 2 986 071**

Printed by Jouve, 75001 PARIS (FR)

**Beschreibung**

Gebiet der Erfindung

Die Erfindung betrifft ein hoch geöffnetes Projektionsobjektiv. Genauer gesagt betrifft die Erfindung ein Projektionsobjektiv mit einer relativen Öffnung von mindestens 1:1,8. Hauptanwendungsgebiet der Erfindung ist die 35 mm Kinoprojektion.

Stand der Technik

Bekannte Projektionsobjektive weisen üblicherweise eine relative Öffnung von 1:1,9 bis 1:2,5 auf. Es ist aber bekannt, dass Beleuchtungssysteme existieren, die eine höhere Öffnung verlangen, wenn ein Maximum von Licht eingefangen werden soll. Die Schaffung eines hoch geöffneten Projektionsobjektivs bedingt zur Korrektur des Öffnungsfehlers den Einsatz von mindestens sieben Linsen (EP 1 134 606 A1) oder den Einsatz von asphärischen Linsen aus Glas, welche sehr teuer sind.

Die US 2,100,290 beschreibt ein Objektiv mit sechs Linsen und einer relativen Öffnung von 1,1, bei dem entlang einer optischen Achse eine erste positive Linse, eine zweite positive Linse, eine dritte negative Linse, eine vierte negative Linse, eine fünfte positive Linse sowie eine sechste positive Linse angeordnet sind. Eine oder mehrere Linsenoberflächen, vorzugsweise die Außenflächen des Objektivs sind asphärisch ausgebildet.

US 2 986 071 und US 2 803 997 beschreiben Objektive mit asphärisch ausgebildeten korrechturplatten.

Aufgabe

Aufgabe der Erfindung ist es, ein kostengünstiges Kinoprojektionsobjektiv zu schaffen, das auch bei einer relativen Öffnung von mindestens 1:1,8 eine ausgezeichnete Abbildungsleistung gewährleistet.

Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet.

Erfindungsgemäß wird ein Projektionsobjektiv mit einer optischen Achse und mit einer im wesentlichen planparallelen Platte vorgeschlagen.

Projektionsobjektive werden üblicherweise zur Projektion eines Films auf eine Leinwand in einem Kinosaal eingesetzt. Sie sind derart ausgestaltet, dass sie den Film (Objekt) vergrößert auf die Leinwand (Bild) abbilden.

In der im wesentlichen planparallelen Platte sind durch Verdickung oder Verdünnung der Platte in Richtung der optischen Achse Abweichungen von der Planparallelität ausgebildet. Die im wesentlichen planparallele Platte wird daher als "asphärisierte planparallele Platte" bezeichnet.

Die Abweichungen von der Planparallelität sind normalerweise rotationssymmetrisch zur optischen Achse ausgebildet. Diese Asphärisierung führt nicht dazu, dass aus der planparallelen Platte effektiv eine weitere Linse wird. Sie dient lediglich zur geringfügigen Korrektur von Abbildungsfehlern. Daher betragen die Abweichungen von der Planparallelität maximal 1 Promill des Durchmessers der planparallelen Platte, in der Regel sogar nur wenige $\mu$m.

Derartige asphärisierte planparallele Platten können durch Schleifen und Polieren einer geeigneten planparallelen Platte günstig hergestellt werden.

Die Verwendung einer schwach asphärisierten planparallelen Platte hat ferner den Vorteil, dass die asphärische Fläche mittels Interferogrammen sehr genau vermessen werden kann. Dabei genügt es, sich das Interferenzmuster der asphärisierten planparallelen Platte anzuschauen. Da die zur Erzeugung der Asphären-Eigenschaften ausgeprägten Abweichungen von der Planparallelität rotationssymmetrisch zur optischen Achse ausgebildet sind, ergeben sich im Interferenzmuster Ringe. Zur Auswertung genügt es i. d. R., die Interferenzringe zu zählen. Das typischerweise zum Überprüfen der Asphären-Eigenschaften von asphärischen Linsen verwendete Hologramm bzw. Kompensationssystem kann entfallen, was zu einer enormen Kostenreduzierung führt.

Die Verwendung einer asphärisierten planparallelen Platte erlaubt die Konstruktion eines Projektionsobjektivs mit einer großen relativen Öffnung von mindestens 1:1,8, typischerweise 1:1,7 - bei unverändert sehr guten Abbildungseigenschaften.

Typischerweise werden für die Kinoprojektion Xenon-Hochdrucklampen mit einer Leistung bis 7 kW verwendet. Das erfindungsgemäße hoch geöffnete Projektionsobjektiv erlaubt es demgegenüber, ein gleich helles Bild mit lediglich einer 5 kW Lampe zu erreichen, da es gegenüber üblichen Projektionsobjektiven um ca. 40% - teils auch mehr - lichtstärker ist. Dadurch ergeben sich erhebliche Energie- und Kosteneinsparungen.

Normalerweise wird man im Bereich der kinematografischen Projektionsobjektive, basierend auf der erfindungsgemäßen Konstruktion, eine Baureihe von einer Vielzahl von Projektionsobjektiven unterschiedlicher Brennweite und damit unterschiedlicher Vergrößerung herstellen. Die einzelnen Objektive einer solchen Baureihe sind den unterschiedlichen Leinwandgrößen und Projektionsabständen angepasst. Die Brennweiten bewegen sich dabei i. d. R. im Bereich von ca. 50 Millimeter bis ca. 90 mm und werden üblicherweise in Schritten von 2,5 mm bis 5 mm Brennweitenunterschied realisiert.

Wie üblich ist das Projektionsobjektiv aus einer Mehrzahl von optischen Elementen - i. d. R. Linsen - aufgebaut. Die optischen Elemente bestehen typischerweise aus den für den Aufbau von Objektiven üblichen Gläsern bzw. Kunststoffen, die hinsichtlich ihres Brechungsindex und ihrer Dispersionseigenschaften ausgewählt werden. Hinzu kommt eine geeignete Beschichtung zur Entspiegelung der optischen Elemente.

Ein Projektionsobjektiv dient zur vergrößernden Abbildung eines Objekts - des Films - auf ein Bild - das auf der Leinwand entstehende Bild des Films. In der Erfindung bildet die asphärisierte planparallele Platte das äußerste bildseitig angeordnete optische Element. Dieser Aufbau zeigt ein Höchstmaß an Auflösung und Abbildungseigenschaften.

Der erfindungsgemäße Aufbau des Projektionsobjektivs erlaubt es, ein Projektionsobjektiv mit einer großen relativen Öffnung kostengünstig herzustellen. Die relative Öffnung ist die Brennweite des Projektionsobjektivs dividiert durch den Durchmesser der Austrittspupille. Es ist der Aufbau mittels einer asphärisierten planparallelen Platte, der es erlaubt, ein Projektionsobjektiv mit einer relativen Öffnung von mindestens 1:1,8 kostengünstig herzustellen. Üblich sind relative Öffnungen von 1:1,9 bis 1:2,5.

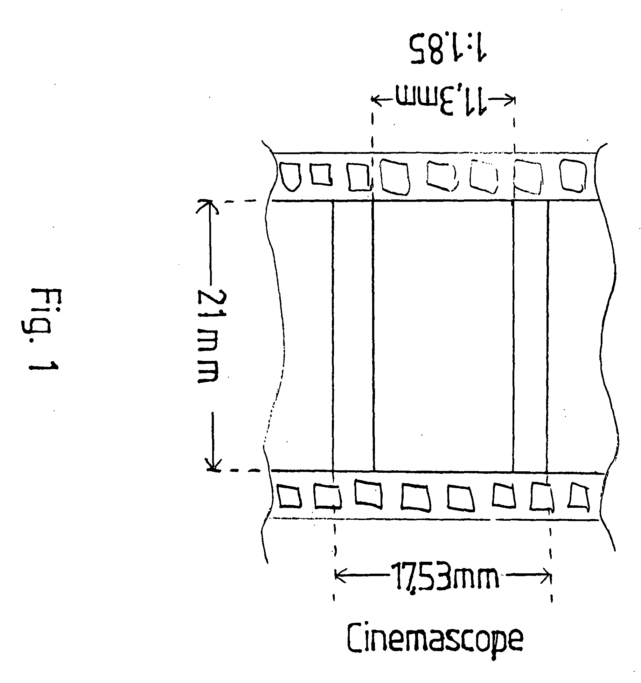

Hauptanwendungsgebiet der Erfindung ist die 35 mm Kinoprojektion. Bei der Kinoprojektion werden üblicherweise zwei Formate projiziert: Zum Einen das 1:1,85 Format (Breitwand-Format), zum Anderen das Cinemascope-Format, bei dem die Projektionsobjektive zusammen mit Anamorphoten das in die Breite gezogene Bild erzeugen. Die beiden Filmformate sind in Fig. 1 schematisch dargestellt. Da die Fläche eines einzelnen Bilds auf dem Film beim Cinemascope-Format um ca. 55 % größer ist, als die Fläche des 1:1,85 Formats, ist das erzeugte Bild bei der Cinemascope-Projektion bezogen auf das erzeugte Bild bei der 1:1,85-Projektion zu hell.

Das erfindungsgemäße Projektionsobjektiv besitzt daher vorzugsweise eine variable Blende, um die Helligkeitsunterschiede, mit denen man bis heute leben musste, auszugleichen. Dies erlaubt es, das erfindungsgemäße Projektionsobjektiv sowohl für das Breitwand- als auch für das Cinemascope-Format zu verwenden. Das Cinemascope-Format muss um 55 %, also um etwa die Hälfte, abgeblendet werden. Dies entspricht genau einer "Blende" der klassischen Optik. Bei einer relativen Öffnung von 1,7 wird diese durch die variable Blende auf etwa 2,4 oder 2,5 verringert. Bei einer relativen Öffnung von 2 wird diese mittels der variablen Blende auf 2,8 verringert.

Für die variable Blende wird vorzugsweise eine stufenlos einstellbare Irisblende verwendet.

Das erfindungsgemäße Projektionsobjektiv ist ein hoch geöffnetes, abblendbares Projektionsobjektiv, das aus sechs freistehenden Linsen besteht, zwischen denen sich also Luft befindet, denen eine asphärisierte planparallele Platte vorangestellt ist. Die variable Blende befindet sich ggf. zwischen der ersten und zweiten bildseitigen Linse.

Im Einzelnen weist das erfindungsgemäße Projektionsobjektiv die folgende Anordnung der optischen Elemente in der Reihenfolge vom vergrößerten Bild zum Gegenstand auf:

- die asphärisierte planparallele Platte,
- eine erste positive Linse,
- ggf. die variable Blende,
- eine zweite positive Linse in Form einer Meniskuslinse,
- eine dritte negative Linse in Form einer bikonkaven Linse,
- eine vierte negative Linse in Form einer bikonkaven Linse,
- eine fünfte positive Linse in Form einer Meniskuslinse,
- eine sechste positive Linse in Form einer bikonvexen Linse.

Die variable Blende ist somit ggf- zwischen der ersten und zweiten positiven Linse bzw. von dem Bild bzw. der Leinwand aus betrachtet hinter der ersten positiven Linse angeordnet. Bei Projektionsobjektiven ist stets anzustreben, dass sich die Eintritts- bzw. Austrittspupille weit von der Filmebene entfernt befindet, um ein Maximum an Licht der Beleuchtungseinrichtung einzufangen. In einem solchen Fall ist es optimal, die Blende ebenfalls weit von der Filmebene entfernt anzubringen. Andernfalls würde es beim Abblenden zu einer stärkeren Vignettierung kommen.

Im Gegensatz zum Stand der Technik (EP 1 134 606 A1), der grundsätzlich mit einem teuren siebenlinsigen Aufbau arbeitet, erreicht das erfindungsgemäß vorgeschlagene Projektionsobjektiv eine vergleichbare Abbildungsqualität und Auflösung bei höherer relativer Öffnung mit nur sechs Linsen und einer sehr kostengünstigen, schwach asphärisierten planparallelen Platte.

Eine Meniskuslinse ist eine Linse, bei der die Krümmungen der beiden Linsenoberflächen in dieselbe Richtung weisen.

Es hat sich gezeigt, dass mit dem erfindungsgemäßen Aufbau die Abbildungsfehler weitgehend reduziert werden können. Die Abbildungsfehler des Projektionsobjektivs liegen damit in einem Bereich, der für das menschliche Auge nicht mehr störend ist, bei gleichzeitig hoher Auflösung.

Die Qualität des Projektionsobjektivs entspricht damit der Qualität der besten üblichen Projektionsobjektive, die Lichtstärke ist aber deutlich höher. Damit ist das erfindungsgemäße Objektiv den üblichen Objektiven in seinen technischen Eigenschaften überlegen. Da auch die Herstellungskosten durch die Verwendung einer asphärisierten planparallelen Platte reduziert sind, ergibt sich für das erfindungsgemäße Projektionsobjektiv ein herausragendes Preis-Leistungs-Verhältnis.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1    eine schematische Darstellung der beiden geläufigsten Filmformate: 1:1,85 Format (Breitwand-Format) und Cinemascope-Format;

Fig. 2    eine Schnittansicht des Aufbaus des Projektionsobjektivs gemäß dem ersten Ausführungsbeispiel;

Fig. 3    die Auflösung des Projektionsobjektivs gemäß dem ersten Ausführungsbeispiel bei Blende 1,7;

Fig. 4    die Auflösung des Projektionsobjektivs gemäß dem ersten Ausführungsbeispiel bei Blende 2,4;

Fig. 5    die relative Beleuchtungsstärke (Vignettierung) der Ränder des vergrößerten Bildes verglichen mit dem Zentrum für das Projektionsobjektiv gemäß dem ersten Ausführungsbeispiel;

Fig. 6    die Verzeichnung für das Projektionsobjektiv gemäß dem ersten Ausführungsbeispiel;

Fig. 7    eine Schnittansicht des Aufbaus des Projektionsobjektivs gemäß dem zweiten Ausführungsbeispiel;

Fig. 8    die Auflösung des Projektionsobjektivs gemäß dem zweiten Ausführungsbeispiel bei Blende 1,7;

Fig. 9    die Auflösung des Projektionsobjektivs gemäß dem zweiten Ausführungsbeispiel bei Blende 2,4;

Fig. 10   die relative Beleuchtungsstärke (Vignettierung) im Bildfeld verglichen mit dem Zentrum des Projektionsobjektivs gemäß dem zweiten Ausführungsbeispiel; und

Fig. 11   die Verzeichnung für das Projektionsobjektiv gemäß dem zweiten Ausführungsbeispiel.

Die Oberfläche einer asphärischen Linse kann allgemein mit der folgenden Formel beschrieben werden:

$$z = \frac{Cy^2}{1 + \sqrt{1 - (1+k) \cdot C^2 y^2}} + Dy^4 + Ey^6 + Fy^8 + Gy^{10}$$

wobei

- $z$ die Pfeilhöhe (in mm) in Bezug auf die achsensenkrechte Ebene angibt, also die Richtung der Abweichung von der Ebene senkrecht zur optischen Achse, d. h. in Richtung der optischen Achse.
- $C$ die sogenannte Scheitelkrümmung angibt. Die Scheitelkrümmung verschwindet bei einer planparallelen Platte. Sie dient zur Beschreibung der Krümmung einer konvexen oder konkaven Linsenoberfläche.
- $y$ den Abstand von der optischen Achse (in mm) angibt. $y$ ist eine Radialkoordinate.
- $k$ die sogenannte Konuskonstante angibt, die hier keine Rolle spielt, da $k$ und $C$ verschwinden.
- $D$, $E$, $F$, $G$ die sogenannte Asphärenkoeffizienten darstellen, die die Koeffizienten einer Polynomentwicklung der Funktion zur Beschreibung der Oberfläche der Asphäre sind. Die Asphärenkoeffizienten werden bei den folgenden Ausführungsbeispielen jeweils angegeben.

Erstes Ausführungsbeispiel

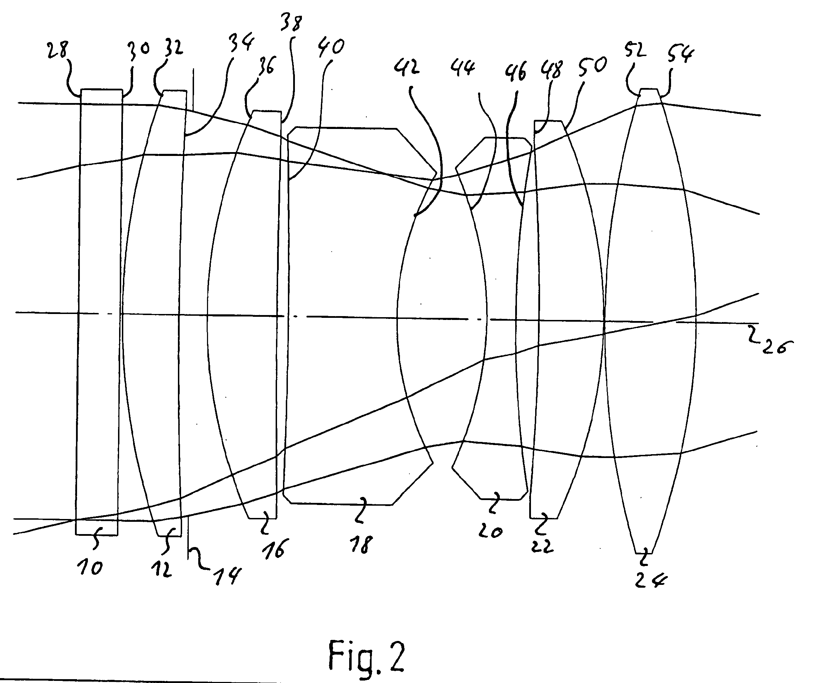

Fig. 2 zeigt den prinzipiellen Aufbau des Projektionsobjektivs gemäß dem ersten Ausführungsbeispiel. Es handelt sich um ein Projektionsobjektiv mit einer Brennweite von 60 mm und einer relativen Öffnung von 1:1,7.

In der Darstellung gemäß Fig. 2 befindet sich die Leinwand bzw. das vergrößerte Bild links und das Objekt beziehungsweise der Film rechts. Das Projektionsobjektiv gemäß dem ersten Ausführungsbeispiel besteht aus folgenden Elementen in der Reihenfolge vom vergrößerten Bild zum Gegenstand, also von links nach rechts:

- eine asphärisierte planparallele Platte 10,
- eine erste positive Linse 12,
- eine variable Blende 14,
- eine zweite positive Linse in Form einer Meniskuslinse 16,

- eine dritte negative Linse in Form einer bikonkaven Linse 18,
- eine vierte negative Linse in Form einer bikonkaven Linse 20,
- eine fünfte positive Linse in Form einer Meniskuslinse 22,
- eine sechste positive Linse in Form einer bikonvexen Linse 24.

Die optische Achse ist mit 26 bezeichnet. Die genauen Angaben zu den einzelnen Oberflächen der optischen Elemente finden sich in der folgenden Tabelle zusammen mit den jeweils zugehörigen Bezugsziffern.

| Bezugsziffer der Oberfläche | Radius / mm | Dicke / mm | Blendenabstand / mm | freier Durchmesser / mm | Brechzahl bzw. Brechnungsindex ($n_e$) bei 546 nm | Dispersion ($v_e$) bei 546 nm |
|---|---|---|---|---|---|---|
| 28 | unendlich (asphärisch) | 2.000 | | 34.000 | 1.518726 | 64.0 |
| 30 | unendlich | 0.200 | | 34.000 | 1.000000 | |
| 32 | 52.802 | 4.750 | | 34.000 | 1.758441 | 52.1 |
| 34 | 358.253 | 2.380 | 0.990 | 33.300 | 1.000000 | |
| 36 | 38.971 | 5.940 | | 31.000 | 1.758441 | 52.1 |
| 38 | 624.295 | 0.980 | | 29.200 | 1.000000 | |
| 40 | -477.944 | 9.250 | | 28.500 | 1.677654 | 31.9 |
| 42 | 23.153 | 7.700 | | 22.800 | 1.000000 | |
| 44 | -28.314 | 2.470 | | 23.600 | 1.677654 | 31.9 |
| 46 | 82.687 | 1.980 | | 27.300 | 1.000000 | |
| 48 | -188.841 | 5.470 | | 27.900 | 1.732350 | 54.5 |
| 50 | -37.095 | 0.100 | | 30.200 | 1.000000 | |
| 52 | 63.875 | 7.680 | | 35.000 | 1.732350 | 54.5 |
| 54 | -53.246 | 0.000 | | 35.400 | 1.000000 | |

Die Dispersion ($v_e$) ist definiert als

$$ v_e = \frac{n_e - 1}{n_{F'} - n_{C'}} \, , $$

wobei $n_F$, der Brechungsindex bei 480 nm und $n_C$, der Brechungsindex bei 643,8 nm ist.

Die Asphärenkoeffizienten der ersten Oberfläche 28 lauten

| C | 0 |
|---|---|
| D | -0.93 X 10⁻⁷ |
| E | 0.20 X 10⁻⁹ |
| F | -0.35 X 10⁻¹² |
| G | 0 |

In der Regel wird nur eine Plattenseite, vorzugsweise die äußere Plattenseite 28, asphärisiert und nicht die innere Plattenseite 30.

Gelangt der abzubildende Film in die Beleuchtungseinrichtung, von wo aus er auf die Leinwand projiziert wird, so erhitzt er sich unter der intensiven Beleuchtung. Durch die Erhitzung wölbt er sich, und zwar das Zentrum des Films in Richtung der Beleuchtungseinrichtung und die Ränder des Films in Richtung der Leinwand. Die Ecken der einzelnen Bilder rücken dadurch i. d. R. um ca. 100 - 200 μm gegenüber dem Zentrum in Richtung der Leinwand vor, typischerweise um ca. 140 μm. In einigen Projektoren wird der Film zur besseren Reproduzierbarkeit der Wölbung bewusst in einer bestimmten gewölbten Form geführt. Dies ist bei der Auslegung des Projektionsobjektivs berücksichtigt. Das Projektionsobjektiv ist zur Abbildung des gewölbten Films optimiert.

Im Folgenden werden die Auflösung und die Abbildungseigenschaften des Projektionsobjektivs gemäß dem ersten Ausführungsbeispiel anhand einiger Figuren näher erläutert.

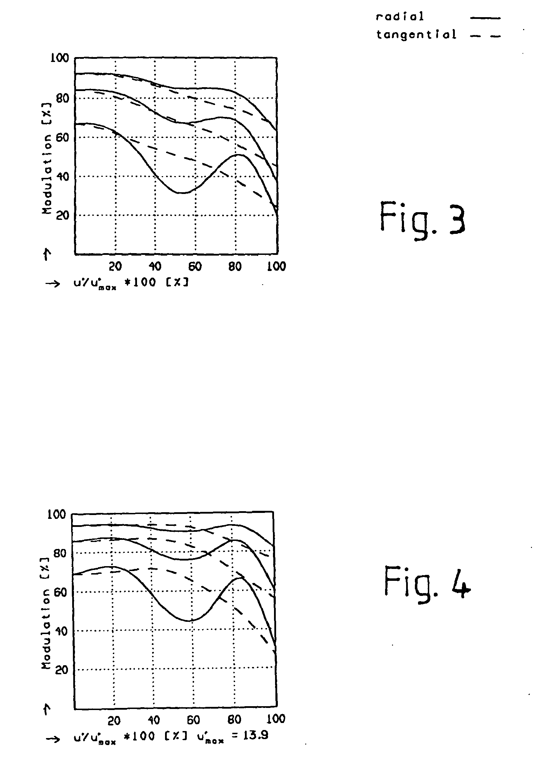

Fig. 3 zeigt die Auflösung des Projektionsobjektivs gemäß dem ersten Ausführungsbeispiel. Die Auflösung wurde für eine Farbgewichtung berechnet, die der mittleren Empfindlichkeit des menschlichen Auges entspricht. Gerechnet wurden drei Beispiele: die oberen beiden Kurven gehören zu dem Beispiel mit einer Ortsfrequenz von 20 Linienpaaren pro mm (LP / mm), die mittleren beiden Kurven zu 40 LP / mm und die unteren beiden Kurven zu 80 LP / mm. Die durchgezogene Linie zeigt jeweils die Auflösung von radial verlaufenden Linienpaaren und die gestrichelte Linie die Auflösung von tangential verlaufenden Linienpaaren. Die x-Achse gibt die relative Abweichung vom Zentrum des zu vergrößernden Bildes an. Auf der y-Achse ist die Modulations-übertragungsfunktion bei einer relativen Öffnung von 1:1,7 dargestellt. Die Abbildung erfolgte quasi ins Unendliche. Die Auflösung des Projektionsobjektivs gemäß dem ersten Ausführungsbeispiel entspricht der Auflösung sehr guter Projektionsobjektive.

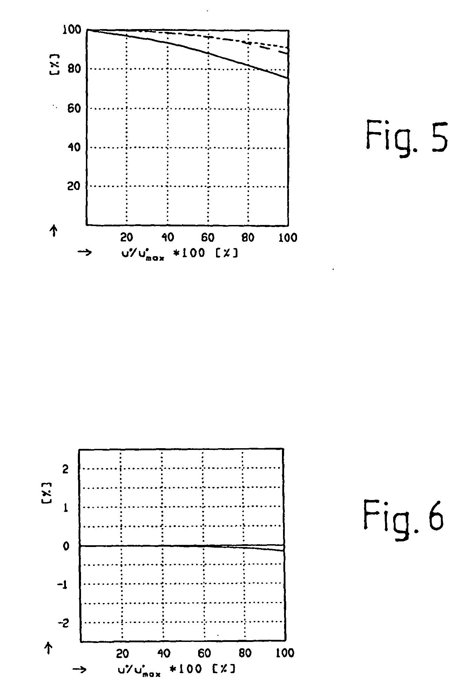

Fig. 4 zeigt die Auflösung des Projektionsobjektivs gemäß dem ersten Ausführungsbeispiel bei einer teilweise geschlossenen Blende (Blende 2,4). Im übrigen entspricht Fig. 4 der Fig. 3.

Fig. 5 zeigt die relative Beleuchtungsstärke der Ränder des vergrößerten Bildes verglichen mit dem Zentrum für das Projektionsobjektiv gemäß dem ersten Ausführungsbeispiel. Die x-Achse entspricht der x-Achse gemäß Fig. 3. Die durchgezogene Linie wurde für eine relative Öffnung von 1,7 berechnet, gestrichelte Linie für 2,0 und die punktierte Linie für 2,4.

Fig. 6 zeigt die Verzeichnung für das Projektionsobjektiv gemäß dem ersten Ausführungsbeispiel in % der Abweichung von der idealen Bildgröße. Man erkennt eine minimale kissenförmige Verzeichnung, die aber ein Zuschauer im Kino nicht wahrnehmen kann.

Zweites Ausführungsbeispiel

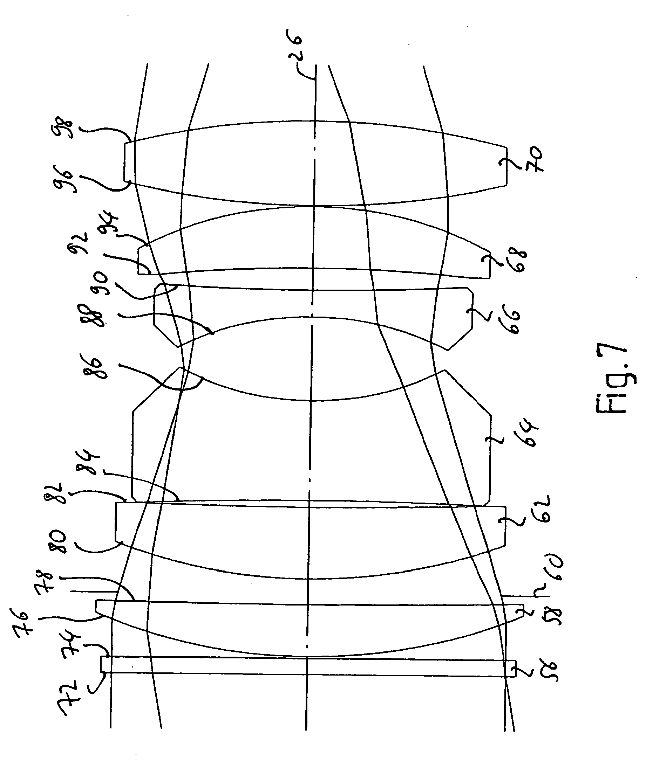

Fig. 7 zeigt den prinzipiellen Aufbau des Projektionsobjektivs gemäß dem zweiten Ausführungsbeispiel. Es handelt sich um ein Projektionsobjektiv mit einer Brennweite von 82,5 mm und einer relativen Öffnung von 1:1,7.

In der Darstellung gemäß Fig. 7 befindet sich wiederum die Leinwand bzw. das vergrößerte Bild links und das Objekt beziehungsweise der Film rechts. Das Projektionsobjektiv gemäß dem zweiten Ausführungsbeispiel besteht aus den gleichen optischen Elementen, wie das Projektionsobjektiv gemäß dem ersten Ausführungsbeispiel:

- eine asphärisierte planparallele Platte 56,
- eine erste positive Linse 58,
- eine variable Blende 60,
- eine zweite positive Linse in Form einer Meniskuslinse 62,
- eine dritte negative Linse in Form einer bikonkaven Linse 64,
- eine vierte negative Linse in Form einer bikonkaven Linse 66,
- eine fünfte positive Linse in Form einer Meniskuslinse 68,
- eine sechste positive Linse in Form einer bikonvexen Linse 70.

Die optische Achse ist mit 26 bezeichnet. Die genauen Angaben zu den einzelnen Oberflächen der optischen Elemente finden sich in der folgenden Tabelle zusammen mit den jeweils zugehörigen Bezugsziffern.

| Bezugsziffer der Oberfläche | Radius / mm | Dicke / mm | Blendenabstand / mm | freier Durchmesser / mm | Brechzahl bzw. Brechnungsindex ($n_e$) bei 546 nm | Disperson ($v_e$) bei 546 nm |
|---|---|---|---|---|---|---|
| 72 | unendlich (asphärisch) | 2.000 | | 46.600 | 1.518726 | 64.0 |
| 74 | unendlich | 0.200 | | 46.600 | 1.000000 | |
| 76 | 63.451 | 6.440 | | 48.100 | 1.758444 | 52.1 |
| 78 | 1023.382 | 3.180 | 1.321 | 47.300 | 1.000000 | |
| 80 | 62.544 | 8.900 | | 43.600 | 1.758444 | 52.1 |

(fortgesetzt)

| Bezugsziffer der Oberfläche | Radius / mm | Dicke / mm | Blendenabstand / mm | freier Durchmesser / mm | Brechzahl bzw. Brechnungsindex ($n_e$) bei 546 nm | Disperson ($v_e$) bei 546 nm |
|---|---|---|---|---|---|---|
| 82 | 562.587 | 0.860 | | 40.500 | 1.000000 | |
| 84 | -442.014 | 12.470 | | 39.800 | 1.677654 | 31.9 |
| 86 | 31.829 | 10.520 | | 30.000 | 1.000000 | |
| 88 | -33.125 | 3.380 | | 30.700 | 1.677654 | 31..9 |
| 90 | 283.488 | 2.710 | | 35.000 | 1.000000 | |
| 92 | -171.729 | 7.650 | | 36.300 | 1.732350 | 54.5 |
| 94 | -42.288 | 0.110 | | 39.000 | 1.000000 | |
| 96 | 92.950 | 10.490 | | 42.400 | 1.732350 | 54.5 |
| 98 | -85.084 | 0.000 | | 42.700 | 1.000000 | |

Die Asphärenkoeffizienten der ersten Oberfläche 72 lauten

| C | 0 |
|---|---|
| D | $0.699617 \times 10^{-7}$ |
| E | $-0.658553 \times 10^{-10}$ |
| F | $-0.715742 \times 10^{-13}$ |
| G | $-0.350000 \times 10^{-16}$ |

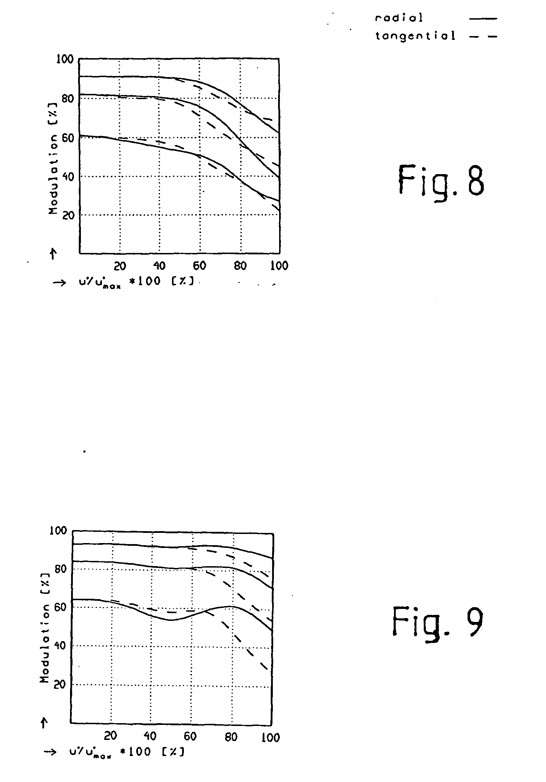

Die Figuren 8 bis 11 zeigen:

Fig. 8     die Auflösung des Projektionsobjektivs gemäß dem zweiten Ausführungsbeispiel bei Blende 1,7;

Fig. 9     die Auflösung des Projektionsobjektivs gemäß dem zweiten Ausführungsbeispiel bei Blende 2,4;

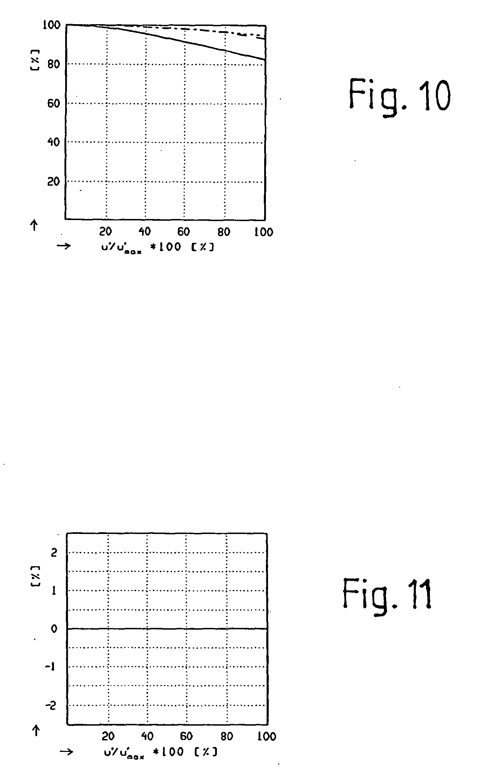

Fig. 10     die relative Beleuchtungsstärke (Vignettierung) im Bildfeld verglichen mit dem Zentrum des Projektionsobjektivs gemäß dem zweiten Ausführungsbeispiel; und

Fig. 11     die Verzeichnung für das Projektionsobjektiv gemäß dem zweiten Ausführungsbeispiel.

Sie entsprechen den Figuren 3 bis 6 für das erste Ausführungsbeispiel.

Man erkennt eine leichte Verbesserung der Abbildungseigenschaften, wie man es bei einer Vergrößerung der Brennweite von 60 mm auf 82,5 mm erwarten konnte.

**Patentansprüche**

1.   Projektionsobjektiv
mit einer optischen Achse (26) und
mit einer asphärisierten im wesentlichen planparallelen Platte (10, 56),

     a) wobei in der Platte (10, 56) durch Verdickung oder Verdünnung der Platte in Richtung der optischen Achse (26) Abweichungen von der Planparallelität ausgebildet sind ; und
     b) wobei folgende optische Elemente in der nachfolgend angegebenen Reihenfolge vom vergrößerten Bild zum Gegenstand angeordnet sind:

         - die asphärisierte planparallele Platte (10, 56),
         - eine erste positive Linse (12, 58),
         - eine zweite positive Linse in Form einer Meniskuslinse (16, 62),
         - eine dritte negative Linse in Form einer bikonkaven Linse (18, 64),

- eine vierte negative Linse in Form einer bikonkaven Linse (20, 66),
- eine fünfte positive Linse in Form einer Meniskuslinse (22, 68), und
- eine sechste positive Linse in Form einer bikonvexen Linse (24, 70).

**2.** Projektionsobjektiv nach dem vorhergehenden Anspruch,
**gekennzeichnet durch**
eine relative Öffnung von mindestens 1:1,8.

**3.** Projektionsobjektiv nach einem der vorhergehenden Ansprüche,
**dadurch gekennzeichnet,**
**dass** zwischen der ersten positiven Linse (12, 58) und der zweiten positiven Linse (16, 62) eine variable Blende (14, 60) zur Regelung der relativen Öffnung angeordnet ist.

**Claims**

**1.** Projection lens
having an optical axis (26) and
having an aspherized substantially plane-parallel plate (10, 56),

a) in which deviations from plane parallelism are formed in the plate (10, 56) by thickening or thinning the plate in the direction of the optical axis; and
b) in which the following optical elements are arranged in the subsequently specified sequence from the enlarged image to the object;

- the aspherized plane-parallel plate (10, 56),
- a first positive lens (12, 58),
- a second positive lens in the form of a meniscus lens (16, 62),
- a third negative lens in the form of a biconcave lens (18, 64),
- a fourth negative lens in the form of a biconcave lens (20, 66),
- a fifth positive lens in the form of a meniscus lens (22, 68), and
- a sixth positive lens in the form of a biconvex lens (24, 70).

**2.** Projection lens according to the preceding claim,
**characterized by**
a relative aperture of at least 1:1.8.

**3.** Projection lens according to one of the preceding claims,
**characterized in tht**
a variable diaphragm (14, 60) is arranged between the first positive lens (12, 58) and the second positive lens (16, 62) for regulating the relative aperture.

**Revendications**

**1.** Objectif de projection
avec un axe optique (26) et
avec une plaque essentiellement plan-parallèle (10, 56) rendue asphérique,

a. dans lequel on forme dans la plaque (10, 56), par épaississement ou amincissement de la plaque dans la direction de l'axe optique (26), des écarts par rapport au parallélisme plan; et
b. dans lequel les éléments optiques suivants sont disposes dans l'ordre indique dans la suite depuis l'image agrandie jusqu'à l'objet:

- la plaque plan-parallèle (10, 56) rendue asphérique,
- une première lentille positive(12, 58),
- une deuxième lentille positive sous la forme d'une lentille en ménisque (16, 62),
- une troisième lentille négative sous la forme d'une lentille biconcave (18, 64),

- une quatrième lentille négative sous la forme d'une lentille biconcave (20, 66),
- une cinquième lentille positive sous la forme d'une lentille en ménisque (22, 68),
- une sixième lentille positive sous la forme d'une lentille biconvexe (24, 70).

2. Objectif de projection selon la revendication précédente, **caractérise par** une ouverture relative d'au moins 1:1,8.

3. Objectif de projection selon une des revendications précédents, **caractérise en ce qu'**un diaphragme variable (14, 60) pour le réglage des l'ouverture relative est dispose entre la première lentille positive (12, 58) et la deuxième lentille positive (16, 62).

Fig. 1

Fig. 2

radial ———
tangential — —

Fig. 3

Fig. 4

Fig. 5

Fig. 6

Fig.7

EP 1 489 451 B1

Fig. 8

Fig. 9

Fig. 10

Fig. 11

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1134606 A1
- US 2100290 A
- US 2986071 A
- US 2803997 A